# EUROPÄISCHE PATENTSCHRIFT

(11) **EP 1 925 533 B1**
(45) Veröffentlichungstag und Bekanntmachung des Hinweises auf die Patenterteilung: **13.05.2009**
(21) Anmeldenummer: 07010069.8
(22) Anmeldetag: 21.05.2007
(51) Int. Cl.: B62D 6/10, B62D 15/02, G01B 7/30, G01D 5/20

(54) **Kombinierter Lenkwinkel- und Drehmomentsensor**
Combined lock angle and torque sensor
Capteur d'angle de rotation et de couple combiné

(30) Priorität: 22.11.2006 DE 102006055049
(43) Veröffentlichungstag der Anmeldung: 28.05.2008
(73) Patentinhaber: Cherry GmbH, 91275 Auerbach/Opf. (DE)
(72) Erfinder: Höller, Reinhold, 91275 Auerbach (DE)
(74) Vertreter: Leske, Thomas

(56) Entgegenhaltungen:
- WO-A-99/21747
- DE-A1- 4 211 616
- DE-A1- 4 232 994
- DE-C1- 10 046 660
- DE-C1- 19 723 069

## Beschreibung

Die Erfindung betrifft einen kombinierten Lenkwinkel-' und Drehmomentsensor, der auf induktiver Basis mit Wirbelstromdämpfung zwei absolute Winkelmesssignale über einen Winkelbereich von 360 Grad erzeugt.

Für solche Messungen ist die Lenksäule üblicherweise durch ein Torsionselement an einer Stoßstelle geteilt. Die Eingangswelle ist dem Lenkrad zugewandt und trägt in der Nähe der tordierten Stoßstelle ein erstes Betätigungselement. Die Ausgangswelle der Lenksäule ist dem Lenkgetriebe zugeordnet und trägt in der Nähe der tordierten Stoßstelle ein zweites Betätigungselement.

In diesem technischen Zusammenhang sind im Stand der Technik bekannt (i) eine induktive Messtechnik mittels Wirbelstromdämpfung, (ii) Messebenen senkrecht zur Drehachse sowie (iii) zwei ringscheibenförmige elektrische Dämpfungsglieder, die beidseitig des Torsionselementes an der Lenksäule angebracht sind, vgl. den Stand der Technik gemäß DE 29 51 148 C2, DE 37 29 230 C2, DE 101 01 174 B4, DE 199 41 464 A1, DE 101 56 238 A1 und DE 10 2004 027 954 A1. Aus der einen oder anderen dieser Schriften sind zusätzlich bekannt (iv) zwei voneinander unabhängige Winkelsensoren in zwei Messebenen, (v) mehrere Flachspulen in einer Messebene sowie (vi) Flachspulen, die nicht nur radial gestaffelt, sondern auch längs des Umfangs über 360 Grad aneinander gereiht sind. In dem Patent DE 101 01 174 B4 ist das elastische Element außerhalb der Längsachse der Lenksäule, nämlich am Lenkrad, angeordnet.

Im PKW- und LKW- und NKW-Bereich werden der Lenkwinkel und das Drehmoment bisher durch zwei separate Sensoren mit verschiedenen Funktionsprinzipien (induktiv, optisch, kapazitiv, magnetisch usw.) erfasst. Viele derzeitige Drehmomentsensoren erlauben aufgrund der hohen Auflösung, die erforderlich ist, nur einen kleinen Drehmomentbereich, der als Winkel ausgedrückt in der Größenordnung von +/- 10 Grad liegt. Auch der Lenkwinkelbereich richtet sich bei vielen Multiturnsensoren nach der erforderlichen Genauigkeit und ist oft eingeschränkt. Da diese Sensoren in sicherheitsrelevanten Applikationen verwendet werden, wird zunehmend Redundanz verlangt. Insgesamt wird häufig ein großer Bauraum benötigt.

Aus der Schrift DE 197 16 321 C1 ist als Multiturnsensor ein Schaltrad bekannt, das eine umlaufende Verzahnung mit fünf Zähnen besitzt. Ein Schaltnocken bewirkt bei jeder vollen Umdrehung einen Schaltschritt des Malteserrades, dessen Anwendungsbereich die Lenkungsanlage eines Kraftfahrzeugs ist.

Die Schrift DE 100 65 240 A1 zeigt ein entsprechendes Schaltrad. Der Winkelschritt beträgt vorzugsweise 60°, womit durch eine Umdrehung des Schaltrades sechs volle Umdrehungen einer Welle detektiert werden können.

Die Aufgabe der Erfindung besteht darin, trotz Redundanz und Doppelfunktion Lenkwinkel/Drehmoment einen kombinierten Sensor auf geringem Bauraum anzugeben. Die Lösung gelingt mit einer Vorrichtung nach dem Anspruch 1.

Die Erfindung stört sich insbesondere an Kodierscheiben und ähnlichen Betätigungselementen, deren Strukturen sich auf dem Kreisumfang periodisch wiederholen und die nur inkrementelle Messungen erlauben. Die Erfindung erzeugt hingegen laut Patentanspruch 1 auf einem gegebenen Kreisumfang zwei absolute Winkelmesssignale. Ferner stört sich die Erfindung an aufwendigen MultiturnSensoren.

Als günstiges Messprinzip hat sich ein induktiver Lenkwinkel- und Drehmomentsensor auf der Basis der Wirbelstromdämpfung herausgestellt. Ein erster Dämpfungsrotor ist mit der Eingangswelle der (durch ein Torsionselement geteilten) Lenksäule verbunden, ein zweiter Dämpfungsrotor sitzt am gegenüber liegenden Ende der Ausgangswelle. Beide Dämpfungsrotoren tragen ein passives Betätigungselement für die Wirbelstromdämpfung, und zwar so, dass sie in derselben Messebene winkelmäßig gegeneinander versetzt wirken. In der Messebene liegt gehäusefest ein Sensorträger, der von der geteilten Lenksäule rechtwinklig durchsetzt wird und mit mehreren Flachspulen im vollen Winkelbereich von 360 Grad bestückt ist. Auf diesen Sensorring wirken die zwei ortsselektiven Betätigungselemente an zwei verschiedenen Stellen ein, die sich zweckmäßigerweise um etwa 180 Grad versetzt gegenüberliegen können. Gemessen werden immer die Signale aller, vorzugsweise vier, Flachspulen. Das von der Ausgangswelle herrührende absolute Winkelmesssignal (oder ein Summensignal aus den zwei Messungen) stellt dann den Lenkwinkel dar, während aus der Differenz der beiden Winkelmesssignale und der Elastizität des Torsionselementes das Drehmoment hergeleitet werden kann.

Zum Zwecke der redundanten Winkelmessung wird in der Nähe der Stoßstelle der geteilten Lenksäule ein zweiter gehäusefester Sensorträger vorgesehen, der ebenfalls von der Lenksäule rechtwinklig durchsetzt ist. Er ist in gleicher Weise wie der erste Träger im vollen Winkelbereich von 360 Grad mit weiteren Flachspulen, allerdings in einer zweiten Messebene bestückt. Zweckmäßigerweise tragen die Dämpfungsrotoren jeweils rückseitig ein zweites Betätigungselement, wiederum ohne periodisch wiederholte Strukturen, für die zweite Messebene.

Da der Lenkwinkel eine volle Umdrehung von 360 Grad oder -180 Grad bis +180 Grad in jede Richtung überschreiten kann, wird noch ein Multiturnzähler benötigt. Im vorliegenden Fall ist dies durch ein Malteserrad mit einer Magnettablette gelöst. Der Multiturnzähler mit Magnettablette wird durch einen an dem Dämpfungsrotor der Ausgangswelle angebrachten Mitnehmer bei jeder vollen Umdrehung der Lenksäule schrittweise angetrieben. Im bevorzugten Ausführungsbeispiel beträgt der Schritt ein Siebtel einer vollen Umdrehung. Die Magnettablette erzeugt schrittweise Zählsignale in Hallsensoren, die auf dem Sensorträger zusätzlich angeordnet sind. Jedes Schrittsignal steht für eine volle Umdrehung der Ausgangswelle der Lenksäule. Statt Permanentmagnet und Hallsensor kann auch jedes andere berührungsfreie Übertragungsprinzip für den Multiturn-Sensor angewandt werden.

Die Auswertung der Messsignale erfolgt digital. Die Sensorspulen sind z.B. jeweils Teil eines Colpitts-Oszillators, dessen digitales Ausgangssignal direkt ausgewertet werden kann. Die Oszillatorfrequenz stellt ein im Messbereich weitgehend lineares Maß für den Messwinkel dar. Die Kombination des induktiven Messprinzips und der digitalen Auswertung erlaubt einen Kombinationssensor auf kleinstem Bauraum. Ein bevorzugtes Ausführungsbeispiel der Erfindung wird anhand der Patentzeichnung erläutert.

Es zeigt:

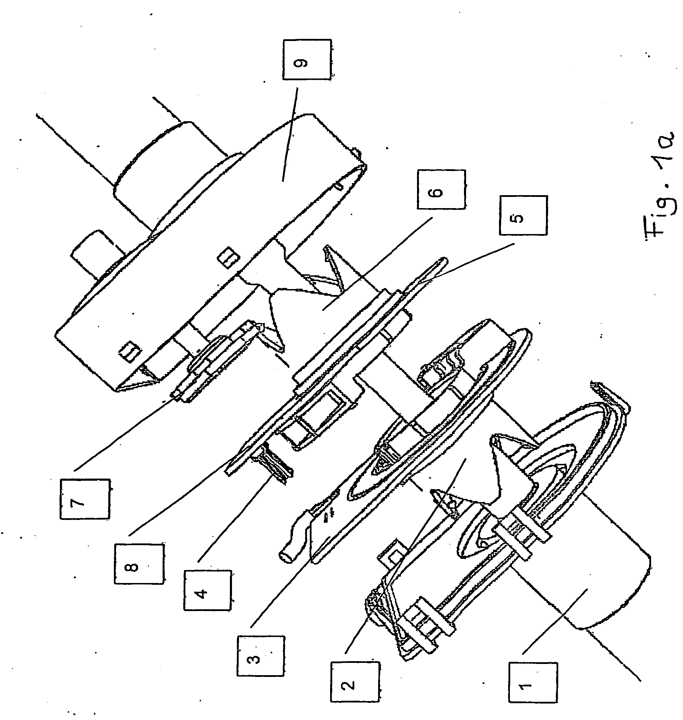

- Figur 1a: eine perspektivische Ansicht eines kombinierten Multiturnlenkwinkel- und Drehmomentsensors nach der Erfindung (Gehäuse mit Boden und Gehäusedeckel sowie der Multiturnsensor axial auseinander gezogen);
- Figur 1 b: eine perspektivische Ansicht eines kombinierten Multiturnlenkwinkel- und Drehmomentsensors nach der Erfindung (Gehäuse mit Boden und Gehäusedeckel sowie der Multiturnsensor axial auseinander gezogen); jedoch der Multiturnsensor auf der Eingangswelle des kombinierten Sensors angebracht;
- Figur 2: einen Sensorträger (Leiterplatte, Platine) mit mehreren Flachspulen kreisbogenförmig bestückt;
- Figur 3: den Dämpfungsrotor der Lenksäulen-Ausgangswelle in perspektivischer Ansicht, dargestellt von der Seite eines Mitnehmers für den Multiturn-Zähler;
- Figur 4: in perspektivischer Ansicht den Multiturn-Zähler nach der Erfindung;
- Figur 5: in axialer Ansicht das Ineinandergreifen des Dämpfungsrotors und des Multiturn-Zählers gemäß den Figuren 3 und 4 sowie der dadurch erfassbare Lenkwinkel;
- Figur 6: einen Schnitt durch die Lenksäule und durch den erfindungsgemäßen Sensor sowie einen vergrößerten Ausschnitt; und
- Figur 7: ein weiteres Ausführungsbeispiel für die gegenüber liegenden Dämpfungsrotoren;
- Figur 8: den Einbauort und den Einbauraum des Sensors an der Lenksäule, wobei der kombinierte Sensor nach der Erfindung angedeutet ist durch seine zusammengesetzten Gehäuseteile gemäß Figur 1.

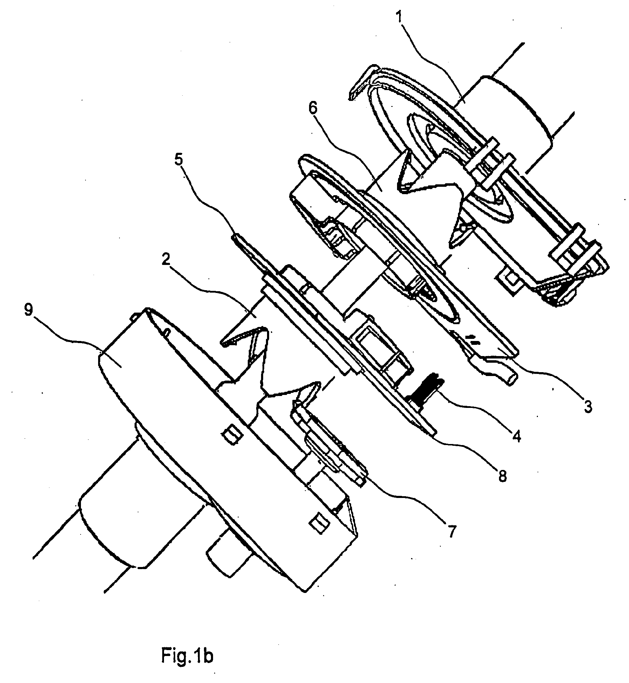

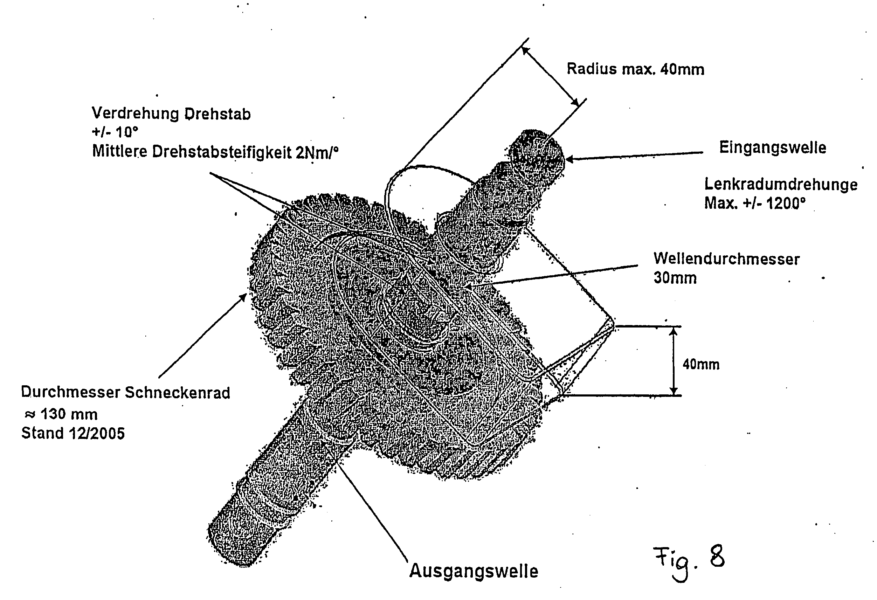

In Figur 1a ist ein Gehäuse 9 samt Boden und ein Gehäusedeckel 1 in axialer Richtung der Lenksäule 2a, 6a auseinander gezogen, so dass ein Ausführungsbeispiel des erfindungsgemäßen Kombinationssensors sichtbar wird. In Figur 8 ist der Einbauort dieses Gehäuses 1, 9 an der Lenksäule 2a, 6a genauer dargestellt. Die Lenksäule ist durch eine Eingangswelle 2a und eine Ausgangswelle 6a geteilt. Auf der Ausgangswelle 6a sitzt ein Schneckenrad, das zum Getriebegehäuse gehört. Daneben befindet sich die Stoßstelle 12 der Eingangswelle 2a und der Ausgangswelle 6a, die das Sensorgehäuse 1, 9 durchsetzt. Gemäß Figur 1b kann der Multiturnsensor 7 aus Gründen der Platzersparnis auch auf der Eingangswelle 2a angeordnet sein.

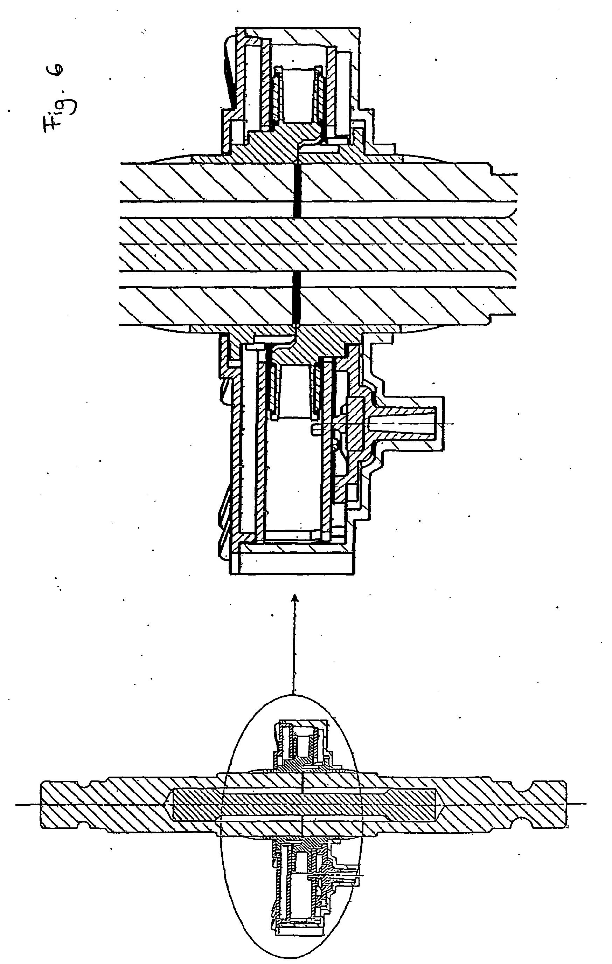

In Figur 6 lässt der axiale Schnitt die Eingangswelle 2a, die Ausgangswelle 6a und einen innen liegenden Torsionsstab 11 erkennen. Die elastische Verdrehung des Torsionsstabs 11 bestimmt die relative Winkeldifferenz der Wellenenden an der Stoßstelle 12 als Funktion des angreifenden, vom Lenkrad her übertragenen Drehmoments. In Figur 6 ist noch ein vergrößerter Ausschnitt des Sensors im Schnitt dargestellt.

Zurückkehrend zu Figur 1 ist mit dem Ende der Eingangswelle 2a ein Dämpfungsrotor 2 verbunden. Mit "Dämpfung" ist fortan die elektrische Wirbelstromdämpfung gemeint, die als Induktivitätsänderung von Messspulen auftritt. Mit dem Ende der Ausgangswelle 6a ist ein entsprechender Dämpfungsrotor 6 verbunden.

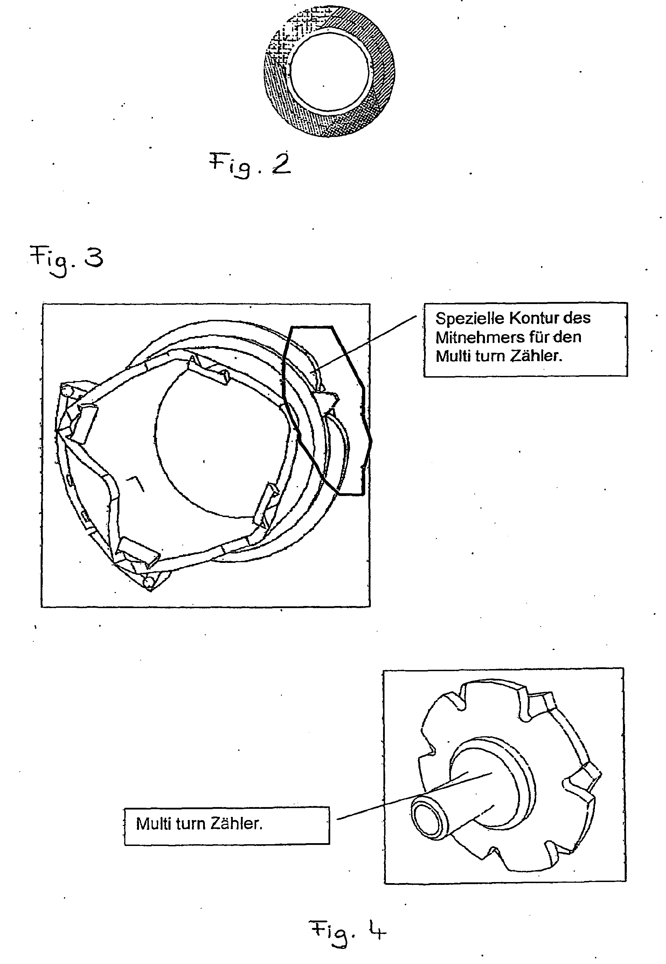

Mit 5 ist eine Sensorplatine oder ein Sensorträger bezeichnet, der in kreisringförmiger Anordnung mehrere Flachspulen 13 trägt. Der Sensorträger 5 ist gehäusefest (1, 9) montiert und wird von der geteilten Lenksäule 2a, 6a rechtwinklig durchsetzt. In Figur 2 ist die Anordnung von vier Flachspulen 13 in der Aufsicht genauer dargestellt. Es hat sich als zweckmäßig erwiesen, die Trennlinie zwischen je zwei Flachspulen 13 nicht genau in radialer Richtung verlaufen zu lassen. Je nach den Anforderungen an die Genauigkeit wird die Anzahl und Form der Flachspulen definiert.

Zurückkehrend zu Figur 1 trägt jeder der Dämpfungsrotoren 2 und 6 ein Betätigungselement 14 in derjenigen Messebene, die den Flachspulen 12 zugewandt ist. Die Betätigungselemente 14 sind beispielsweise dünne Aluminiumplättchen, die auf die Stirnflächen der Dämpfungsrotoren 2 und 6 aufgebracht sind. Sie wirken wie eine Wirbelstrombremse ortsselektiv auf die Flachspulen 13 gemäß Figur 2 ein.

Die Länge des Betätigungselements 14 beträgt weniger als ¼ des Kreisumfangs, so dass die Wirbelstromdämpfung ortsselektiv jeweils auf zwei der vier Flachspulen 13 gemäß Figur 2 einwirkt. Wichtig für die ortsselektive Arbeitsweise ist, dass das Betätigungselement 14 sich nicht über den gesamten Kreisumfang erstreckt und keine periodisch sich wiederholenden Strukturen aufweist.

Die Betätigungselemente 2b und 6b wirken an zwei verschiedenen Stellen auf die kreisbogenförmige Spulenanordnung 13 ein. Insbesondere sind sie in der gleichen Messebene um etwa 180 Grad gegeneinander versetzt. Da die von den Flachpulen 13 erzeugten Signale ständig gemessen werden, stehen ständig mindestens zwei absolute Winkelmesssignale auf dem gesamten Kreisumfang von 360 Grad zur Verfügung. Aus diesen Signalen lassen sich sowohl der Lenkwinkel als auch das Drehmoment durch eine digitale Auswertungsschaltung ermitteln.

In dieser Technologie, die den Übergang zu "steer-by-wire" bildet, wird häufig eine Redundanz gefordert, die den Ausfall einzelner Bauelemente ohne weiteres verkraftet. In der Technologie gemäß Figur 1 ist diese Redundanz sehr einfach zu erzielen. Hierzu ist ein weiterer Sensorträger 3 auf der anderen Seite der Stoßstelle 12 vorgesehen, der mit seinen Flachspulen 13b eine weitere Messebene bildet. Die gleichen Dämpfungsrotoren 2 und 6 tragen zu diesem Zweck rückseitig zu den ersten Betätigungselementen 2b und 6b weitere Betätigungselemente 2c und 6c, die in geringem Abstand zu den weiteren Flachspulen 13b in der zweiten Messebene wirksam sind. Aufbau und Funktion der weiteren Trägerplatine 3 sind völlig analog.

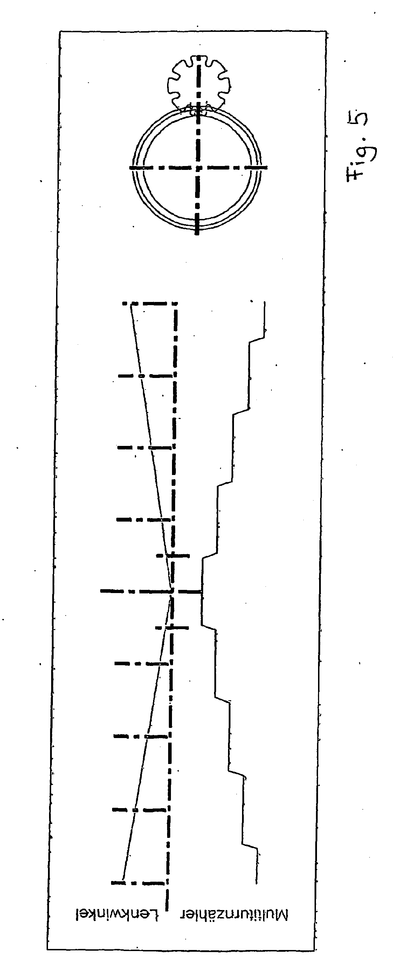

Schließlich trägt der Sensoraufbau gemäß Figur 1 der Tatsache Rechnung, dass insbesondere bei Lastkraftwagen der Lenkwinkel den Bereich eines vollen Kreisumfanges von -180 Grad bis +180 Grad überschreiten kann. Hierzu ist ein Multiturn-Zähler 7 zusätzlich in dem Gehäuse 1, 9 angeordnet. In Figur 1 ist der Multiturn-Zähler 7 zusammen mit dem Gehäuseboden 9 axial herausgezogen; im Einbauzustand liegt er in einer Ebene mit dem Dämpfungsrotor der Ausgangswelle 6a oder der Eingangswelle 2a. Dann greifen der Dämpfungsrotor 6 und der Multiturn-Zähler 7 ineinander, wie die Seitenansicht gemäß Figur 5 erkennen lässt. Gemäß Figur 3 trägt der Dämpfungsrotor 6 hierzu an einer äußeren Stelle des Umfangs einen Mitnehmer 15, der eine schrittweise Mitnahme des Malteserrads 7 bewirkt. Im bevorzugten Ausführungsbeispiel hat das Malteserrad 7 auf dem Kreisumfang sieben Mitnahmeelemente 16 verteilt. Der Multiturn-Zähler 7 gibt also eine Anzeige darüber, in welcher von sieben Umdrehungsperioden sich die Lenksäule befindet. In Figur 5 ist dieser absolute Lenkwinkel von 7 mal 360° = -1260° bis +1260° zusammen mit den sieben Zuständen des Multiturn-Zählers 7 grafisch dargestellt.

Zur Auswertung enthält der Multiturn-Zähler 7, der aus dem speziellen, auf den Mitnehmer des Dämpfungsrotors abgestimmten Antriebsrad besteht, z.B. eine Magnettablette. Mit Hilfe der Magnettablette werden die Umdrehungen der Lenksäule dadurch erfasst, dass auf der Sensorplatine 5 z.B. zwei zusätzliche Hall-Sensoren angeordnet sind. Durch die Mechanik des mitgenommenen Malteserrads wird im Vergleich zu heute üblichen, herkömmlichen Zahnrädern eine schnelle Abnutzung sowie eine Geräuschemission verhindert. Denn im Regelfall wird sich das Multiturn-Malteserrad 7 erst ab einem Lenkwinkeleinschlag von ca. +/- 170° und mehr bewegen.

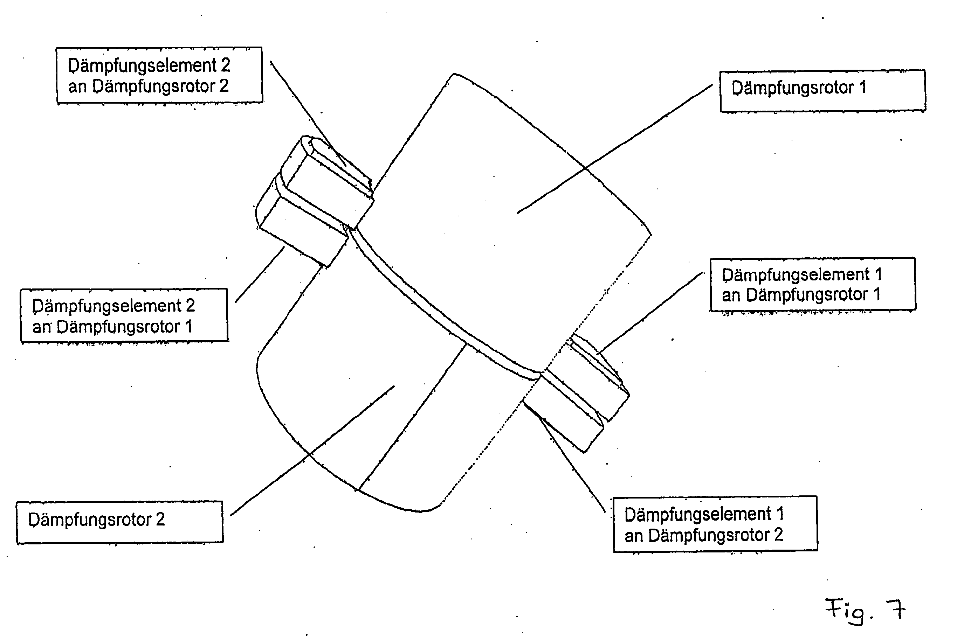

In Figur 7 ist alternativ zu Figur 3 in Verbindung mit Figur 1 ein weiteres Ausführungsbeispiel für gegenüber liegende Dämpfungsrotoren dargestellt. In diesem Fall ist die Formgebung der Nasen, an denen sich die Dämpfungselemente befinden, geändert. Für das zweite Dämpfungselement wird nicht mehr die Rückseite der Nase benutzt, die in die zweite Messebene reicht, sondern es wird eine zweite, separate Nase für das andere Dämpfungselement vorgesehen. Im Ergebnis können die Winkeldaten betriebssicher, mit hoher Ortsauflösung und zeitnah an eine zentrale Regel- und Steuereinrichtung des PKW, LKW oder NKW übertragen werden.

## Patentansprüche

1. Kombinierter Lenkwinkel- und Drehmomentsensor, der auf induktiver Basis mit Wirbelstromdämpfung zwei absolute Winkelmess-Signale über einen Winkelbereich von 360 Grad erzeugt, umfassend
- einen ersten Dämpfungsrotor (2) am Ende einer Eingangswelle (2a) einer durch ein Torsionselement (11) geteilten (12) Lenksäule,
- einen zweiten Dämpfungsrotor (6) am Ende einer Ausgangswelle (6a) der Lenksäule,
- mindestens einen gehäusefesten (1, 9), von der geteilten Lenksäule (2a, 6a) rechtwinklig durchsetzten, mit mehreren Flachspulen (13) in dem vollen Winkelbereich von 360 Grad bestückten Träger (3 oder 5),
- wobei die zwei Dämpfungsrotoren (2, 6) jeweils mindestens ein passives Betätigungselement ohne periodisch wiederholte Strukturen tragen, und
- wobei die Betätigungselemente (14) an zwei verschiedenen Stellen des 360 Grad umfassenden Winkelbereichs auf die Flachspulen (13) des Trägers (3 oder 5) wirken.

2. Kombinierter Lenkwinkel- und Drehmomentsensor nach Anspruch 1, **dadurch gekennzeichnet, dass** die Betätigungselemente (14, 2b, 6b) sich um etwa 180 Grad versetzt in einer Messebene gegenüber liegen.

3. Kombinierter Lenkwinkel- und Drehmomentsensor nach Anspruch 1 oder 2, umfassend einen zweiten, gehäusefesten (1, 9), ebenfalls in der Nähe der Stoßstelle (12) der geteilten Lenksäule rechtwinklig durchsetzten Träger (5 oder 3), der im Winkelbereich von 360 Grad mit weiteren Flachspulen (13a) zur redundanten Winkelmessung bestückt ist.

4. Kombinierter Lenkwinkel- und Drehmomentsensor nach Anspruch 3, **dadurch gekennzeichnet, dass** die Dämpfungsrotoren (2, 6) jeweils rückseitig ein zweites Betätigungselement (14a) ohne periodisch wiederholte Strukturen tragen, die zur redundanten Winkelmessung auf die Flachspulen (13a) des zweiten Trägers (5 oder 3) wirken.

5. Kombinierter Lenkwinkel- und Drehmomentsensor nach Anspruch 3 oder 4, **dadurch gekennzeichnet, dass** die Dämpfungsrotoren (2, 6) eine zweite Betätigungsnase für ein zweites Betätigungselement (14a) aufweisen.

6. Kombinierter Lenkwinkel- und Drehmomentsensor nach einem der vorhergehenden Ansprüche 1 bis 5, **gekennzeichnet durch** einen Multiturn-Zähler (7), der **durch** einen an dem Dämpfungsrotor (6) der Ausgangswelle (6a) angebrachten Mitnehmer (15) bei jeder vollen Umdrehung der Lenksäule schrittweise angetrieben wird.

7. Kombinierter Lenkwinkel- und Drehmomentsensor nach Anspruch 6, **dadurch gekennzeichnet, dass** eine Magnettablette des Multiturn-Zählers (7) in auf dem Träger (5) angeordneten Hall-Sensoren (8) schrittweise Zählsignale für volle Umdrehungen der Ausgangswelle (6a) der Lenksäule erzeugt.

8. Kombinierter Lenkwinkel- und Drehmomentsensor nach Anspruch 6 oder 7, **dadurch gekennzeichnet, dass** ein Malteserrad (7) als Multiturn-Zähler durch den Mitnehmer (15) schrittweise angetrieben wird.

9. Kombinierter Lenkwinkel- und Drehmomentsensor nach Anspruch 8, **dadurch gekennzeichnet, dass** sieben Mitnahmeelemente auf dem Kreisumfang des Malteserrads (7) verteilt sind.

## Claims

1. A combined steering angle and torque sensor that inductively and with eddy current damping generates two absolute angle measurement signals over an angle range of 360°, comprising
- a first damping rotor (2) being disposed on an end of an input shaft (2a) of a steering column divided (12) by a torsion element,
- a second damping rotor (6) being disposed on an end of an output shaft (6a) of the steering column,
- at least one carrier (3 or 5) being fixed to a housing (1, 9) and through which said divided steering column (2a, 6a) passes at a right angle, said at least one carrier (3 or 5) bearing a plurality of flat coils (13) in said full angle range of 360°,
- wherein the two damping rotors (2, 6) bear at least one passive actuation element (14), without periodically repeated structures, and
- wherein the actuating elements (14) act in two different locations of said 360° angle range on said flat coils (13) of said carrier (3 or 5).

2. A combined steering angle and torque sensor according to claim 1, **characterized in that** said actuating elements (14, 2b, 6b) oppose one another by about 180° in a measurement plane.

3. A combined steering angle and torque sensor according to claim 1 or 2, further comprising a second carrier (5 or 3) that is fixed to the housing (1, 9) and through which that steering column passes at a right angle also in the vicinity of an abutment (12) of said divided steering column, said second carrier (5 or 3) being equipped with additional flat coils (13a) in the complete angle range of 360° for redundant angle measurement.

4. A combined steering angle and torque sensor according to claim 3, **characterized in that** the damping rotors (2, 6) each carry on a backside thereof a second actuating element (14a), without periodically repeated structures, and acting on said additional flat coils (13a) of said second carrier (5 or 3) to provide redundant angle measurement.

5. A combined steering angle and torque sensor according to claim 3 or 4, **characterized in that** the damping rotors (2, 6) include a second actuating lug for a second actuating element (14a).

6. A combined steering angle and torque sensor according to claim 1 to 5, **characterized by** a multi-turn counter (7) that is incrementally driven by a catch element (15) attached to said second damping rotor (6) of said output shaft (6a) with each complete rotation of said steering column.

7. A combined steering angle and torque sensor according to claim 6, **characterized in that** said multi-turn counter (7) includes a magnetic tablet which generates incremental counting signals for complete rotations of said output shaft (6a) in Hall sensors (8) arranged on said carrier (5).

8. A combined steering angle and torque sensor according to claim 6 or 7, **characterized in that** a Geneva wheel (7) is incrementally driven by said catch element (15).

9. A combined steering angle and torque sensor according to claim (8), **characterized in that** seven catch elements (15) are distributed on a circular circumference of said Geneva wheel (7).

## Revendications

1. Capteur d'angle de direction et de couple combiné, qui produit, de manière inductive avec amortissement des courants de Foucault, deux signaux de mesure angulaire absolus sur une plage angulaire de 360 degrés, comprenant :
- un premier rotor d'amortissement (2) à l'extrémité d'un arbre d'entrée (2a) d'une colonne de direction divisée (12) par un élément de torsion (11),
- un deuxième rotor d'amortissement (6) à l'extrémité d'un arbre de sortie (6a) de la colonne de direction,
- au moins un support (3 ou 5) fixé au boîtier (1, 9), traversé à angle droit par la colonne de direction (2a, 6a) divisée, équipé de plusieurs bobines plates (13) dans la plage angulaire totale de 360 degrés,
- les deux rotors d'amortissement (2, 6) portant chacun au moins un élément d'actionnement passif sans structures périodiquement récurrentes, et
- les éléments d'actionnement (14) agissant à deux endroits différents de la plage angulaire couvrant 360 degrés, sur les bobines plates (13) du support (3 ou 5).

2. Capteur d'angle de direction et de couple combiné selon la revendication 1, **caractérisé en ce que** les éléments d'actionnement (14, 2b, 6b), sont disposés les uns en face des autres dans un plan de mesure avec un décalage d'environ 180 degrés les uns par rapport aux autres.

3. Capteur d'angle de direction et de couple combiné selon la revendication 1, comprenant un deuxième support (5 ou 3) fixé au boîtier (1, 9), également traversé à angle droit à proximité du point d'impact (12) de la colonne de direction divisée, qui est équipé dans une plage angulaire de 360 degrés, d'autres bobines plates (13a) pour une mesure angulaire redondante.

4. Capteur d'angle de direction et de couple combiné selon la revendication 3, **caractérisé en ce que** les rotors d'amortissement (2, 6) portent chacun du côté arrière un deuxième élément d'actionnement (14a) sans structures périodiquement récurrentes, qui agissent en vue d'une mesure d'angle redondante sur les bobines plates (13a) du deuxième support (5 ou 3).

5. Capteur d'angle de direction et de couple combiné selon la revendication 3 ou 4, **caractérisé en ce que** les rotors d'amortissement (2, 6) présentent un deuxième nez d'actionnement pour un deuxième élément d'actionnement (14a).

6. Capteur d'angle de direction et de couple combiné selon l'une quelconque des revendications 1 à 5, **caractérisé par** un compteur multitour (7) qui est entraîné pas à pas pour chaque rotation complète de la colonne de direction, par un dispositif d'entraînement (15) monté sur le rotor d'amortissement (6) de l'arbre de sortie (6a).

7. Capteur d'angle de direction et de couple combiné selon la revendication 6, **caractérisé en ce qu'**une tablette magnétique du compteur multitour (7) produit, dans des capteurs de Hall (8) disposés sur le support (5), des signaux de comptage pas à pas pour des rotations complètes de l'arbre de sortie (6a) de la colonne de direction.

8. Capteur d'angle de direction et de couple combiné selon la revendication 6 ou 7, **caractérisé en ce qu'**une roue de Malte (7) est entraînée pas à pas en tant que compteur multitour par le dispositif d'entraînement (15).

9. Capteur d'angle de direction et de couple combiné selon la revendication 8, **caractérisé en ce que** sept éléments d'entraînement sont répartis sur la périphérie circulaire de la roue de Malte (7).
